# EUROPÄISCHE PATENTSCHRIFT

(11) **EP 3 233 343 B1**
(45) Veröffentlichungstag und Bekanntmachung des Hinweises auf die Patenterteilung: **09.08.2023**
(21) Anmeldenummer: 15804137.6
(22) Anmeldetag: 03.12.2015
(51) Int. Cl.: B23F 5/16, B23F 21/10

(54) **WÄLZSCHÄLVERFAHREN UND SCHNEIDWERKZEUG ZUR ERZEUGUNG ZUMINDEST TEILVERRUNDETER ZAHNKÖPFE**
HOB PEELING METHOD AND CUTTING TOOL FOR PRODUCING AT LEAST PARTIALLY ROUNDED TOOTH TIPS
PROCÉDÉ DE TAILLAGE EN DÉVELOPPANTE ET OUTIL DE COUPE POUR GÉNÉRER DES TÊTES DE DENT AU MOINS PARTIELLEMENT ARRONDIES

(30) Priorität: 16.12.2014 DE 102014118764; 24.04.2015 DE 102015106354
(43) Veröffentlichungstag der Anmeldung: 25.10.2017
(73) Patentinhaber: Profilator GmbH & Co. KG, 42329 Wuppertal (DE)
(72) Erfinder: ZIMMERMANN, Jonathan, 45145 Essen (DE)
(74) Vertreter: Grundmann, Dirk
(86) Internationale Anmeldenummer: PCT/EP2015/078465
(87) Internationale Veröffentlichungsnummer: WO 2016/096451

(56) Entgegenhaltungen:
- DE-A1-102008 037 514
- JP-A- 2014 039 971
- US-A- 2 258 849
- US-A- 2 324 003
- US-A- 2 427 641

## Beschreibung

Die Erfindung betrifft ein Verfahren zum Verzahnen von Werkrädern mit einem Schneidzähne aufweisenden Schneidwerkzeug, wobei das Werkrad von einer Werkstückspindel um eine Werkstückspindelachse und das Schneidwerkzeug von einer Werkzeugspindel um eine Werkzeugspindelachse in einem vorgegebenen Drehzahlverhältnis zueinander drehangetrieben werden, die Werkstückspindelachse und die Werkzeugspindelachse in einem Achskreuzwinkel zueinander stehen und wobei die Zahnflanken der Schneidzähne an ihren stirnseitigen Enden Schneidkanten mit an den Rändern einer Lücke zwischen zwei benachbarten Schneidzähnen angeordneten, jeweils entlang einer ersten Konturlinie sich erstreckende Flankenschneidabschnitte ausbilden, die zufolge eines Vorschubs in Richtung der Verzahnung des Werkrades schneidend in das Werkrad eingreifend Zähne mit einer durch den Schneidkantenverlauf vorgegebenen Zahnflankenkontur erzeugen. Ein derartiges Verfahren gemäß dem Oberbegriff des Anspruchs 1 ist aus dem Dokument DE 10 2008 037 514 A1 bekannt.

Die Erfindung betrifft darüber hinaus ein Schneidwerkzeug gemäß dem Oberbegriff des unabhängigen Anspruchs 6 zur Durchführung des Verfahrens mit Schneidzähnen, wobei das Schneidwerkzeug eine Werkzeugachse aufweist, wobei die Zahnflanken der Schneidzähne an ihren stirnseitigen Enden Schneidkanten mit an den Rändern einer Lücke zwischen zwei benachbarten Schneidzähnen angeordneten, jeweils entlang einer ersten Konturlinie sich erstreckende Flankenschneidabschnitte ausbilden.

Ein gattungsgemäßes Verfahren beziehungsweise ein gattungsgemäßes Wälzfräswerkzeug wird in der DE 10 2009 003 601 A1, aber auch in den DE 10 2008 037 514 A1, DE 10 2008 037 578 A1 und DE 10 2005 049 528 A1 beschrieben. Eine Werkzeugspindelachse, die mit ihrer Drehachse eine Werkzeugspindelachse definiert, trägt ein Schneidwerkzeug, das sich um seine Konturachse dreht. Eine Werkstückspindel, die mit ihrer Drehachse eine Werkstückspindelachse definiert, trägt ein zu verzahnendes Werkrad. Die beiden Achsen stehen in einem Achskreuzwinkel zueinander, so dass die Schneidzähne des Schneidwerkzeugs bei einer synchronisierten Drehung der beiden Spindeln schälend in den Werkstoff des Werkrades eingreifen. Zufolge eines in die Verzahnungsrichtung des Werkrades gerichteten Vorschubs wird das Werkrad zufolge eines schälenden Eingriffs der Schneidkanten in das Werkstück verzahnt. Die Zähne des Werkrades können parallel zur Achse des Werkrades, aber auch gekreuzt und/oder geneigt dazu verlaufen. Es ist die Fertigung von geradverzahnten und schrägverzahnten Werkrädern möglich. Die Schneidzähne des Schneidwerkzeugs verlaufen derart schräg zur Achse des Schneidwerkzeugs, dass die Schneidzähne kämmend in die Lücken zwischen den Zähnen des Werkrades eingreifen bzw. die Zähne des Werkrades kämmend in die Schneidzahnlücken eingreifen. Die Zahnflanken der Schneidzähne besitzen an ihren stirnseitigen Enden Schneidkanten. Die Schneidkanten bilden Flankenschneidabschnitte aus, die die Flanken der Werkradzähne auf eine vorgegebene Form, bspw. Evolventenform bringen. Die Flankenschneidabschnitte sind an den Rändern der Schneidzahnlücke angeordnet und verlaufen jeweils entlang einer Konturlinie, bei der es sich um einen Bogen handelt. Die Krümmung des Bogens ist derart gewählt, dass die Zahnflanken der zu erzeugenden Zähne den vorbestimmten Verlauf, insbesondere Evolventenverlauf erhalten. Die Stirnflächen der Schneidzähne verlaufen beim Stand der Technik jeweils in einer Ebene, die im Wesentlichen senkrecht zu den beiden Zahnflanken des Schneidrades verläuft. Die Schneidwerkzeuge, die auch als Schneidräder bezeichnet werden, besitzen somit einen Treppenschliff. Im Bereich des Grundes der Schneidzahnlücke bildet sich somit ein gestufter Abstand zwischen den Flankenschneidabschnitten aus.

Die US 2,258,849 beschreibt ein zahnradförmiges Werkzeug mit schräg zur Achse verlaufenden Schneidzähnen, deren Schneidkanten von Rändern einer Furche bzw. einer Fase ausgebildet werden.

Zum Stand der Technik gehört darüber hinaus ein Verzahnwerkzeug zur Fertigung eines Pfeilzahnrades. Pfeilzähne werden mit einer Hobelmaschine gefertigt, die als Werkzeug ein schräg verlaufende Hobelzähne aufweisendes Hobelrad verwenden. Die Stirnflächen der Hobelzähne sind mit sogenannten Stirn-Scharfschliffen versehen. Bei einem Stirn-Scharfschliff wird die spitzwinklig zur Stirnfläche des Hobelzahnes verlaufende Zahnflanke vom Rand einer Fase gebildet. Die stumpfwinklig zur Stirnfläche des Hobelzahnes verlaufende Schneidkante wird vom Rand einer Furche gebildet.

Die Erfindung betrifft darüber hinaus die Verwendung eines derartigen Werkzeugs zum Verzahnen von Werkrädern.

Der Erfindung liegt die Aufgabe zugrunde, ein gattungsgemäßes Wälzschälverfahren, eine diesbezügliche Vorrichtung und ein für das Verfahren verwendbares Werkzeug gebrauchsvorteilhaft weiterzubilden.

Die Aufgabe wird durch das Verfahren gemäß Anspruch 1, das Schneidwerkzeug gemäß Anspruch 6, die Vorrichtung gemäß Anspruch 10, die Verwendung gemäß Anspruch 12 des Werkzeugs gemäß zumindest Anspruchs 6 und die Vorrichtung gemäß Anspruch 13 mit dem Werkzeug gemäß zumindest Anspruch 6 gelöst. Die Schneidkanten können somit trotz einer Neigung der Zahnflanke den gleichen oder einen ähnlichen Spanwinkel besitzen. Die Stirnflächen aller Schneidzähne liegen bevorzugt in einer rotationssymmetrisch und kontinuierlich um die Werkzeugspindelachse verlaufenden Fläche. Bei dieser Fläche kann es sich um eine Ebene handeln, in der die Werkzeugspindelachse senkrecht steht. Die Ebene kann aber auch von einer Kegelmantelfläche, insbesondere Innenkegelmantelfläche ausgebildet sein, wobei die Werkzeugspindelachse beziehungsweise die Konturachse des Schneidwerkzeuges in der Kegelachse liegt. Mit einer derartigen Ausgestaltung eines Schälrades lässt sich das gattungsgemäße Verfahren in vielfältiger Weise weiterbilden, wobei zumindest vorteilhaft, bevorzugt aber wesentlich ist, dass die eine Zahnlücke zwischen zwei benachbarten Schneidzähnen begrenzenden Schneidkanten, also die beiden Flankenschneidabschnitte und die sich daran anschließenden Kopfschneidabschnitte bevorzugt in einer gemeinsamen unterbrechungsfreien Fläche, insbesondere Ebene oder Kegelmantelfläche liegen. Dadurch bilden sich spitzwinklig zur Stirnfläche verlaufende und stumpfwinklig zur Stirnfläche verlaufende Zahnflanken aus. Bei einer derartigen Ausgestaltung können die zwischen zwei benachbarten Zähnen sich erstreckenden Schneidkanten in mehreren geringfügig zueinander versetzt liegenden Ebenen verlaufen. Bei einer derartigen Ausgestaltung ist bevorzugt vorgesehen, dass die spitzwinklig zur Stirnfläche verlaufenden Zahnflanken an ihrem an die Stirnfläche angrenzenden Rand eine Fase besitzen. Eine Kante der Fase kann zumindest den Flankenschneidabschnitt ausbilden. Die stumpfwinklig zur Stirnfläche des Schneidrades verlaufenden Zahnflanken besitzen dann an ihrem an die Stirnfläche angrenzenden Rand einen von dem Rand einer Furche gebildeten Flankenschneidabschnitt. Die Fase und die Furche werden in glatte Stirnflächen des Werkzeuges eingeschliffen. Der maximale Versatz der Schneidkanten ist bevorzugt die Tiefe der Furche oder der Fase beziehungsweise die Differenz der Tiefe der Furche von der Tiefe der Fase.

Gemäß der Erfindung schließt an jeden der beiden Flankenschneidabschnitte sich jeweils ein Kopfschneidabschnitt an, der sich entlang einer zweiten Konturlinie im Bereich des Grundes der Schneidzahnlücke erstreckt. Die Konturlinie verläuft auf einer Fußeckenkrümmung, insbesondere entlang eines Fußeckenradius. Die Flankenschneidabschnitte und die Kopfschneidabschnitte erstrecken sich bevorzugt jeweils entlang von Bögen, wobei der Flankenschneidabschnitt und der sich daran anschließende Kopfschneidabschnitt auf sich entgegengesetzt gekrümmten Bögen verlaufen. Der Flankenschneidabschnitt und der Kopfschneidabschnitt grenzen somit an einem Krümmungswendepunkt der Schneidkante aneinander. Mit dem Kopfschneidabschnitt lässt sich ein zumindest teilverrundeter Zahnkopf des Werkrades fertigen. Eine Kante der Fase beziehungsweise Furche kann nicht nur den Flankenschneidabschnitt ausbilden. Die Kante kann bereichsweise aber auch einen der Kopfschneidabschnitte ausbilden. Der sich an den Flankenschneidabschnitt anschließende Kopfschneidabschnitt kann somit bereichsweise vom Rand einer Furche oder einer Fase gebildet sein. Die Fase wird der spitzwinkligen Zahnflanke angeschliffen. Die Furche wird in den an die stumpfwinklige Zahnflanke angrenzenden Rand der Stirnseite des Zahnes eingeschliffen. Die Flankenschneidabschnitte gehen bevorzugt knickfrei in die Kopfschneidabschnitte über. Die Flankenschneidabschnitte können aber auch unter Ausbildung einer geringfügigen Unstetigkeit in die Kopfschneidabschnitte übergehen. Eine derartige Unstetigkeit bildet eine spanbrechende Kontur. Dies ist insbesondere dann von Vorteil, wenn die gesamte Umfangslinie des Schneidwerkzeuges eine im Wesentlichen durchgehende Schneidkante ausbildet. Durch diese spanbrechende Unstetigkeit wird die Bildung langer Spanlocken vermieden. Die beiden Kopfschneidabschnitte können in einem Scheitelbereich der Schneidzahnlücke mit einem Scheitelschneidabschnitt miteinander verbunden sein. Mit diesem Scheitelschneidabschnitt wird der Scheitelbereich eines Zahnes des Werkrades profiliert. Die beiden Kopfschneidabschnitte und der dazwischenliegende Scheitelschneidabschnitt können glatt, also im Wesentlichen knickstellenfrei gleichsinnig gerundet ineinander übergehen. Besonders bevorzugt bilden die Kopfschneidabschnitte, zusammen mit den Flankenschneidabschnitten und dem Scheitelschneidabschnitt eine gemeinsame U-förmige Schneidkante, die im Wesentlichen in einer Ebene liegt, die parallel zur Stirnfläche des Schneidwerkzeugs verläuft. Die U-förmige Schneidkante kann aber auch in einer Kegelfläche liegen. Alle U-förmigen Schneidkanten liegen bevorzugt im Wesentlichen in einer gemeinsamen Fläche/Ebene, wobei ein geringfügiger Ebenenversatz von maximal der Tiefe der Furche bzw. der Fase zulässig ist. Mit dem erfindungsgemäßen Werkzeug lassen sich nicht nur die Zahnflanken der Zähne des Werkrades auf eine vorgegebene Flankenkontur bringen. Erfindungsgemäß ist eine Teilverrundung beziehungsweise Vollverrundung der Zahnköpfe der Zähne des Werkrades möglich. Mit dem erfindungsgemäßen Schneidwerkzeug beziehungsweise dem erfindungsgemäßen Verfahren ist somit eine Vollprofilierung der Zähne des Werkrades möglich. Das mit dem Schneidwerkzeug durchgeführte Verfahren kann eine Nachbearbeitung eines vorverzahnten Rohlings sein, wobei bei der Nachbearbeitung die Zahnflanken auf die gewünschte Kontur gebracht werden. Insbesondere erfolgt bei der Nachbearbeitung die Verrundung oder Teilverrundung der Zahnköpfe durch die Kopfschneidabschnitte der Schneidkanten. Mit dem erfindungsgemäßen Werkzeug kann aber auch eine Vollverzahnung eines unverzahnten Rohlings vorgenommen werden. Bei dieser Bearbeitung wird die mit dem Schneidwerkzeug erzeugte Zahnlücke zwischen den Zähnen der zu erzeugenden Verzahnung schrittweise vertieft, wobei in dem letzten Bearbeitungsschritt die Zahnkopfverrundung beziehungsweise die Teilverrundung durchgeführt wird. In einer Projektionsebene, in der die Drehachse der Werkstückspindel liegt und die durch den Punkt des tiefsten Zahneingriffs des Schneidzahnes in das Werkstück verläuft, verlaufen die Werkstückachse und die Werkzeugachse parallel zueinander. Die Werkzeugachse ist um den Achskreuzwinkel quer zu dieser Projektionsfläche gegenüber der Werkstückachse geneigt. Die sich in Erstreckungsrichtung der Schneidzähne erstreckenden Scheitellinien der Schneidzähne verlaufen bei einem in dieser Anordnung verwendeten Schneidwerkzeug auf einer Kegelmantelfläche. Die Scheitellinien der Schneidzähne können auf einer Kegelmantelfläche verlaufen. Die Kegelmantelfläche bildet somit eine Hüllfläche aus, innerhalb der die Schneidzähne verlaufen. Ein derartiges Werkzeug hat den Vorteil, dass sich die Vorrichtung einfacher einrichten lässt, da nur der Achskreuzwinkel einzustellen ist.

In einer zweiten Variante der Erfindung ist die Verwendung eines Schneidwerkzeuges vorgesehen, bei dem die Scheitellinien der Schneidzähne auf einer Zylindermantelfläche verlaufen. Ein derartiges gerad- oder schrägverzahntes Schneidwerkzeug ist einfacher herzustellen. Bei der Durchführung des Verfahrens verlaufen die Drehachse des Werkstücks und die Drehachse des Werkzeuges in der Projektionsebene nicht parallel zueinander, sondern besitzen einen Neigungswinkel, so dass die Scheitellinie bei der Bearbeitung in einem Freiwinkel zur Scheitellinie des gefertigten Zahnfußes verläuft. Die Stirnseite des Schneidwerkzeuges bildet Flankenschneidabschnitte aus, die die oben erwähnte Furche beziehungsweise Fase aufweist. Die Stirnseite des Schneidwerkzeuges kann eine Ebene sein. Bevorzugt wird die Stirnfläche aber von einer Innenkegelfläche ausgebildet, so dass sich beim Wälzschälen ein positiver Spanwinkel ausbildet. Bei diesem Werkzeug liegen die Schneidzähne innerhalb einer Hüllfläche, die eine Zylindermantelfläche ist. Gegenüber der oben beschriebenen Variante, bei der die Scheitellinien auf einer Kegelmantelfläche verlaufen, hat dieses Schneidwerkzeug zwar den Vorteil, einfacher fertigbar zu sein, jedoch ist der Aufwand zur Einrichtung der Vorrichtung geringfügig größer, weil die Werkzeugspindel zusätzlich um einen Winkel weg von der zu erzeugenden Verzahnung geneigt werden muss, um einen Freiwinkel zu erzeugen.

In einer dritten Variante der Erfindung ist vorgesehen, dass die Schneidzähne des Schneidwerkzeuges keine einheitliche Zahnbreite aufweisen. Es ist vorgesehen, dass zumindest ein Schneidzahn verbreitert ist. Die Größe der Verbreiterung kann sich über eine beliebige Umfangslänge erstrecken. Als Folge der erfindungsgemäßen Weiterbildung des Standes der Technik bilden sich die beim Stand der Technik, wo ein Treppenschliff verwendet wird, entstehenden großen Stufen zwischen den Schneidflanken eines verbreiterten Schneidzahnes nicht aus. Der verbreiterte Zahn kann sich über zwei oder mehrere Teilungsperioden des Schneidwerkzeuges erstrecken. Es ist insbesondere vorgesehen, dass die Breite des verbreiterten Zahnes der Breite zweier nebeneinander liegender Schneidzähne entspricht. Bevorzugt erstreckt sich der mindestens eine verbreiterte Schneidzahn über eine Zahnlücke der regulären Teilung. Der verbreiterte Schneidzahn ist in die Periodizität der regulären Teilung eingepasst. Neben einem verbreiterten Schneidzahn kann sich eine verbreiterte Zahnlücke erstrecken. Der verbreiterte Schneidzahn kann aber auch neben einer verschmälerten Zahnlücke angeordnet sein. Er kann beidseitig von einer verschmälerten oder einer verbreiterten Zahnlücke flankiert sein. Das Drehzahlverhältnis von Werkzeugspindel und Werkstückspindel ist derart gewählt, dass nach einer Werkstückumdrehung der verbreiterte Schneidzahn in eine verbreiterte Zahnlücke des Werkrades eintaucht. Die Drehzahl der Werkzeugspindel kann ein ganzzahliges Mehrfaches der Werkstückspindel sein.

Ausführungsbeispiele der Erfindung werden nachfolgend anhand beigefügter Zeichnungen erläutert. Es zeigen:
- Fig. 1: ein Werkrad 1 und ein in spanendem Zahneingriff zum Werkrad 1 stehendes, von einem Schneidwerkzeug 2 gebildeten Schneidrad,
- Fig. 2: eine weitere Seitenansicht in Blickrichtung des Pfeiles II in Figur 1 zur Verdeutlichung des Achskreuzwinkels α,
- Fig. 3: eine Draufsicht auf die in den Figuren 1 und 2 dargestellte Anordnung,
- Fig. 4: eine perspektivische Darstellung des Schneidwerkzeuges 2 mit Blick auf die Stirnseite 7,
- Fig. 5: den Ausschnitt V in Figur 4, stark vergrößert,
- Fig. 6: den Ausschnitt VI in Figur 6, stark vergrößert,
- Fig. 7: eine Stirnseitenansicht des Schneidwerkzeugs 2,
- Fig. 8: den Schnitt gemäß der Linie VIII-VIII in Figur 7,
- Fig. 9: den Ausschnitt IX in Figur 7, stark vergrößert,
- Fig. 10: den Ausschnitt X in Figur 8, stark vergrößert
- Fig. 11: ein zweites Ausführungsbeispiel der Erfindung ähnlich der Darstellung gemäß Figur 6,
- Fig. 12: den Schnitt gemäß der Linie XII-XII in Figur 11,
- Fig. 13: ein drittes Ausführungsbeispiel der Erfindung in einer Darstellung gemäß Figur 3,
- Fig. 14: den Schnitt gemäß der Linie XIV-XIV in Figur 13 durch die Werkstückspindelachse 4 und den Punkt des tiefsten Eingriffs eines Schneidzahnes in die zu fertigende Zahnlücke,
- Fig. 15: den Schnitt gemäß der Linie XV-XV in einer Schnittebene, die senkrecht zur Schnittebene des Schnitts gemäß der Linie XIV-XIV verläuft,
- Fig. 16: die Draufsicht auf die die Schneidkanten aufweisende Stirnseite des in den Figuren 13 bis 15 dargestellten Schneidrades 2,
- Fig. 17: eine Seitenansicht auf das in Figur 16 dargestellte Schneidrad,
- Fig. 18: eine Rückseitenansicht auf das in der Figur 16 dargestellte Schneidrad,
- Fig. 19: das in den Figuren 16 bis 18 dargestellte Schneidrad perspektivisch,
- Fig. 20: ein viertes Ausführungsbeispiel gemäß Figur 14,
- Fig. 21: als fünftes Ausführungsbeispiel der Erfindung ein Schneidrad mit einem verbreiterten Schneidzahn 24 und
- Fig. 22: die Seitenansicht des in der Figur 21 dargestellten Schneidrades.

Das erfindungsgemäße Verfahren wird mit einer im Stand der Technik bekannten Werkzeugmaschine durchgeführt. Diese Werkzeugmaschine ist in den Zeichnungen nicht dargestellt, da sie in vielfältiger Form in anderweitigen Druckschriften beschrieben wird. Lediglich beispielhaft wird auf eine Vorrichtung verwiesen, wie sie in der DE 4 122 460 C1, der DE 101 13 653 A1 oder der DE 10 2005 049 530 B4 beschrieben wird.

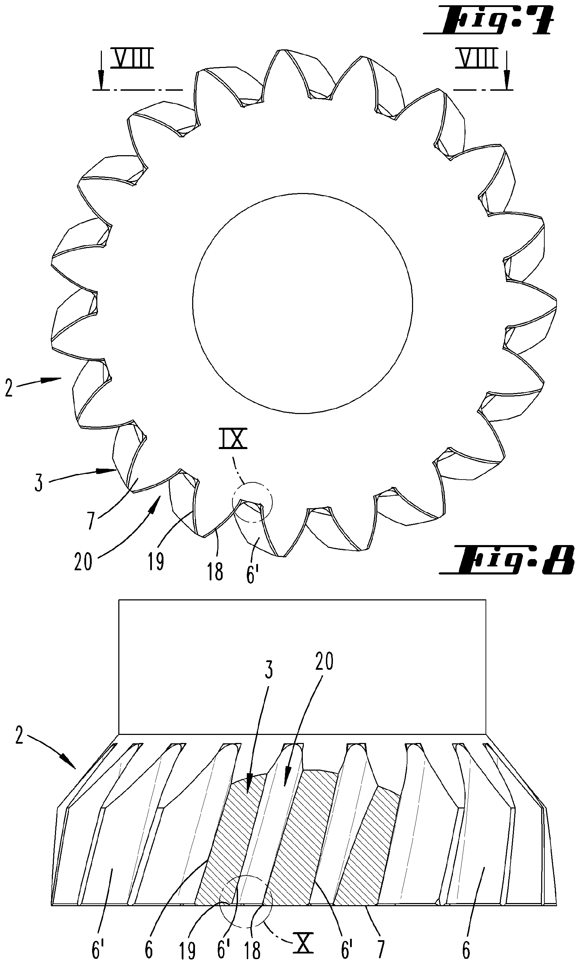

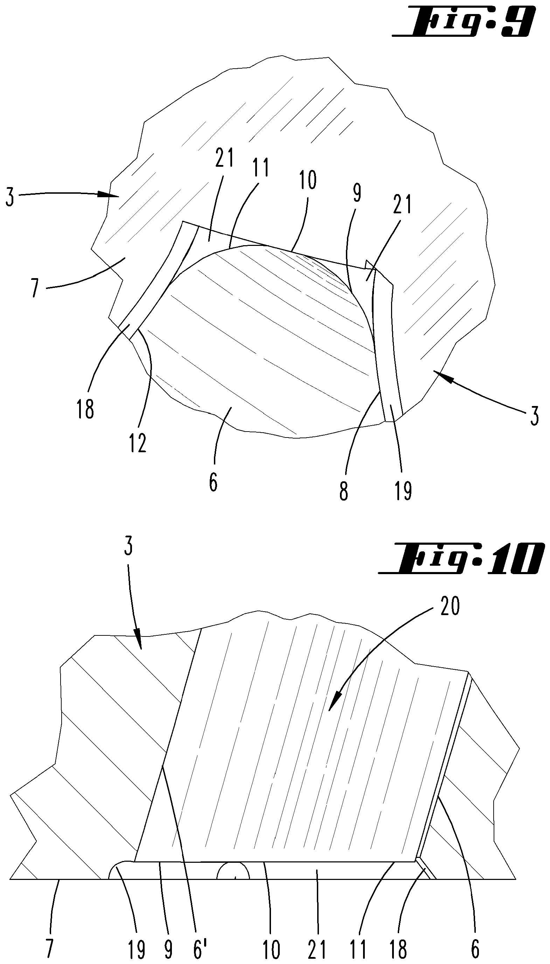

Eine Werkzeugspindel, die um eine Werkzeugspindelachse 5 drehangetrieben wird, trägt ein Schneidwerkzeug 2, das radial nach außen abragende Schneidzähne 3 aufweist. Die Scheitellinien der Schneidzähne 3 verlaufen schräg zur Werkzeugspindelachse 5, die mit der Konturachse des Schneidwerkzeugs 2 zusammenfällt. Zwischen den Schneidzähnen 3 befinden sich Schneidzahnlücken 20. Die Stirnseite 7 des Schneidwerkzeugs 2 liegt in einer Ebene, die senkrecht zur Werkzeugachse 5 beziehungsweise der Werkzeugachse 5 verläuft. Eine spitzwinklig zur Stirnseite 7 verlaufende Zahnflanke 6 besitzt an ihrem an die Stirnseite 7 angrenzenden Rand einen Flankenschneidabschnitt 12. Eine dieser Zahnflanke 6 gegenüberliegende stumpfwinklig zur Stirnseite 7 verlaufende Zahnflanke 6' besitzt an ihrem an die Stirnseite 7 angrenzenden Rand einen Flankenschneidabschnitt 8 (siehe Figuren 8,10). Die beiden Flankenschneidabschnitte 8, 12 verlaufen auf einer in der Ebene der Stirnseite 7 gekrümmten Linie, die derart gekrümmt ist, dass mit diesen Flankenschneidabschnitten 8 die Zahnflanken 14 von Zähnen 13 eines Werkrades 1 eine vorgegebene Evolventenform erhalten (siehe Figuren 7, 9).

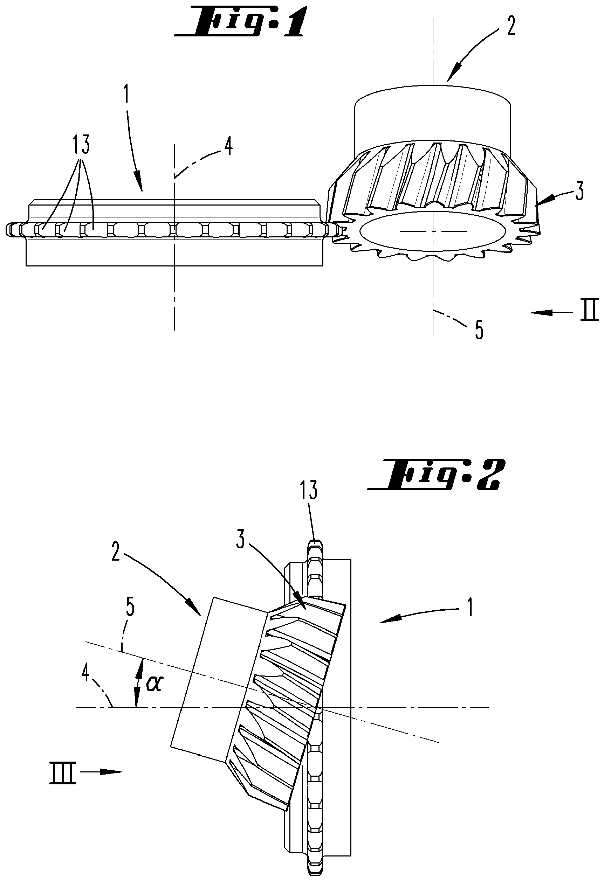

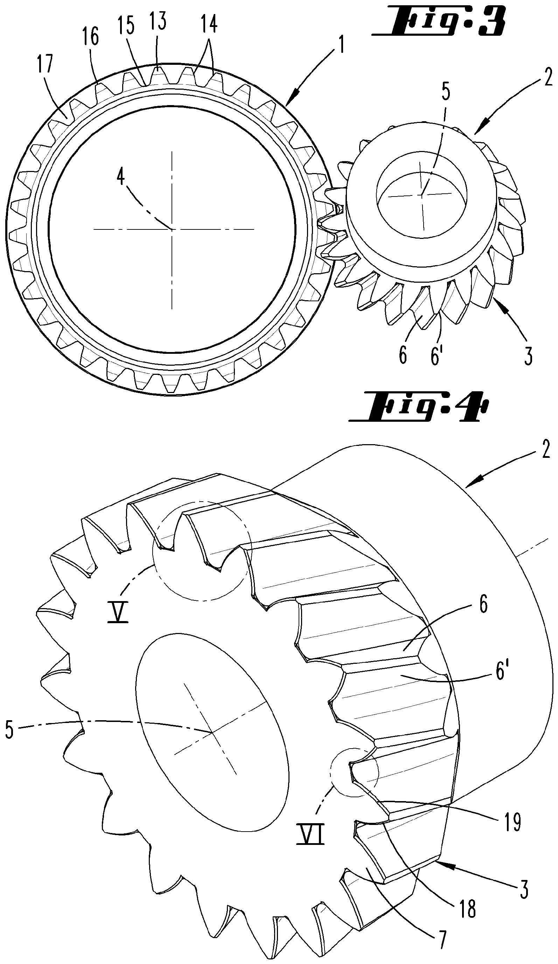

Das Werkrad 1 besitzt eine Achse 4 und wird von einer nicht dargestellten Werkstückspindel drehangetrieben, die eine Werkstückspindelachse 4 definiert. Die Werkstückspindelachse 4 und die Werkzeugspindelachse 5 stehen in einem festen Achskreuzwinkel α zueinander (siehe Figur 2). Dies hat zur Folge, dass das synchron zum Werkrad 1 drehangetriebene Schneidwerkzeug 2 mit seinen Schneidzähnen 3 schälend in das Werkrad 1 eingreift (siehe Figur 3). Mit einem in Erstreckungsrichtung der Zähne 13 des Werkrades 1 gerichteten Vorschub werden die Zahnlücken 17 zwischen den Zähnen 13 herausgeschält. Es bilden sich die besagten, auf einer Evolvente verlaufenden Zahnflanken 14 aus. Der Vorschub kann auch der Schälrichtung entgegengerichtet sein. Die Bearbeitung des Werkrades 1 erfolgt dann in einem ziehenden Schnitt.

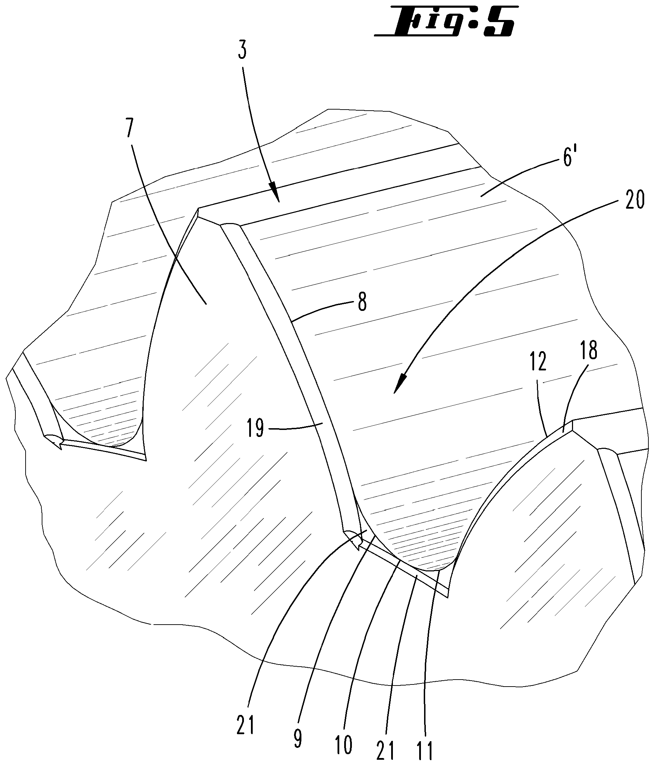

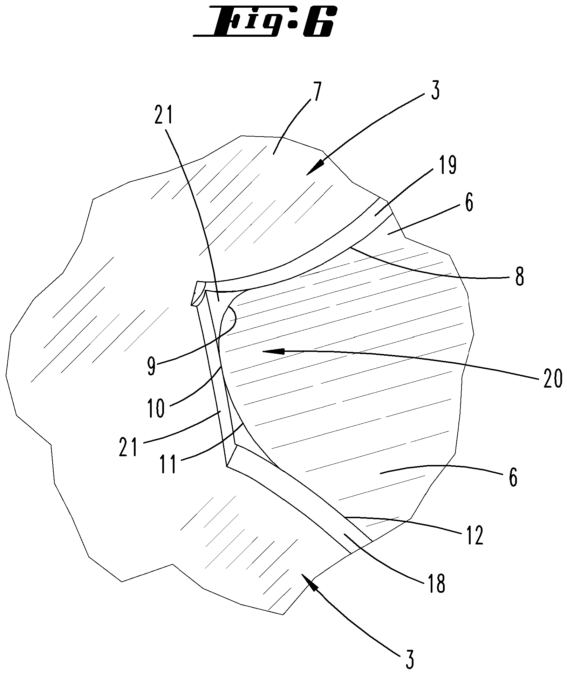

Beim Schneidwerkzeug 2 schließen sich an den Flankenabschnitt 8 ein Kopfschneidabschnitt 9 und an den Flankenschneidabschnitt 12 ein Kopfschneidabschnitt 11 an (siehe Figur 5, 6, 9). Die beiden Kopfschneidabschnitte 9, 11 verlaufen auf einer bogenförmigen Linie, wobei der Bogen, auf dem der Kopfschneidabschnitt 9, 11 verläuft, vom Bogen, auf dem der Flankenschneidabschnitt 8, 12 verläuft, weggerichtet ist. Die beiden Bögen sind in entgegengesetzter Richtung gekrümmt, liegen bei diesem Ausführungsbeispiel jedoch in einer gemeinsamen Ebene, die parallel verläuft zur Stirnseite 7, die wiederum senkrecht zur Werkzeugspindelachse 5 beziehungsweise zur Konturachse des Schneidwerkzeugs 2 verläuft.

Die von den Flankenabschnitten 8, 12, dem Scheitelschneidabschnitt 10 und den Kopfschneidabschnitten 9, 11 ausgebildete Schneidkante erstreckt sich unterbrechungsfrei und glatt verlaufend vom Kopf eines Schneidzahnes 3 zum Kopf eines dazu benachbarten Schneidzahnes 3 durch die gesamte Schneidzahnlücke 20 hindurch. Beim Ausführungsbeispiel gehen die einzelnen Abschnitte 8 bis 12 der Schneidkante knickfrei ineinander über. Während mit den Flankenschneidabschnitten 8, 12 die Zahnflanken 14 profiliert werden, wird mit den Kopfschneidabschnitten 9, 11 und dem Scheitelschneidabschnitt 10 der Zahnkopf 16 des Zahnes 13 profiliert. Der Zahnkopf 16 erhält somit eine durch den Verlauf der Kopfschneidabschnitte 9, 11 und dem Verlauf des Scheitelschneidabschnittes 10 definierte Verrundung. Es kann sich dabei um eine durchgehende Verrundung handeln. Der Kopf kann aber auch nur teilverrundet werden.

Den stark vergrößerten Darstellungen der Figuren 5, 6, 9 und 10 ist zu entnehmen, dass an dem an die Stirnseite 7 spitzwinklig angrenzenden Rand der Zahnflanke 6 eine Fase 18 angebracht ist, die im Übergangsbereich zur Zahnflanke 6 den Flankenschneidabschnitt 12 ausbildet. Aus diesen Figuren ist ferner zu entnehmen, dass die mit ihrem Rand stumpfwinklig an die Stirnseite 7 angrenzende Zahnflanke 6' einen Flankenschneidabschnitt 8 ausbildet, der vom Rand einer Furche 19 gebildet ist, die sich entlang des Randes in der Stirnseite 7 erstreckt. Die Furche 19 und die Fase 18 können mit demselben Schleifwerkzeug, einer speziell abgerichteten Schleifscheibe erzeugt werden. Sie werden in die Stirnfläche des Werkzeuges eingeschliffen. Durch einen derartigen Stirn-Scharfschliff können trotz schräg zur Stirnseite 7 verlaufenden Zahnflanken 6, 6' Flankenschneidabschnitte 8, 12 erzeugt werden, die einen definierten Schneidkantenwinkel besitzen.

Die beiden Kopfschneidabschnitte 9, 11 gehen unter Ausbildung einer Abschrägung 21 in die Stirnseite 7 über. Die Abschrägung 21 kann in das Werkzeug eingeschliffen werden. Dies erfolgt derart, dass die Kopfschneidabschnitte 9, 11 im Bereich des Scheitelabschnitts 10 ineinander übergehen und mit ihren anderen Enden in den jeweiligen Flankenschneidabschnitt 8, 12 übergehen. Es bildet sich somit eine Ebene aus, in der sämtliche jeweils von Schneidabschnitten 8 bis 12 gebildete Schneidkanten des Schneidwerkzeugs 2 liegen, wobei diese Ebene parallel versetzt zur Ebene der Stirnseite 7 verläuft.

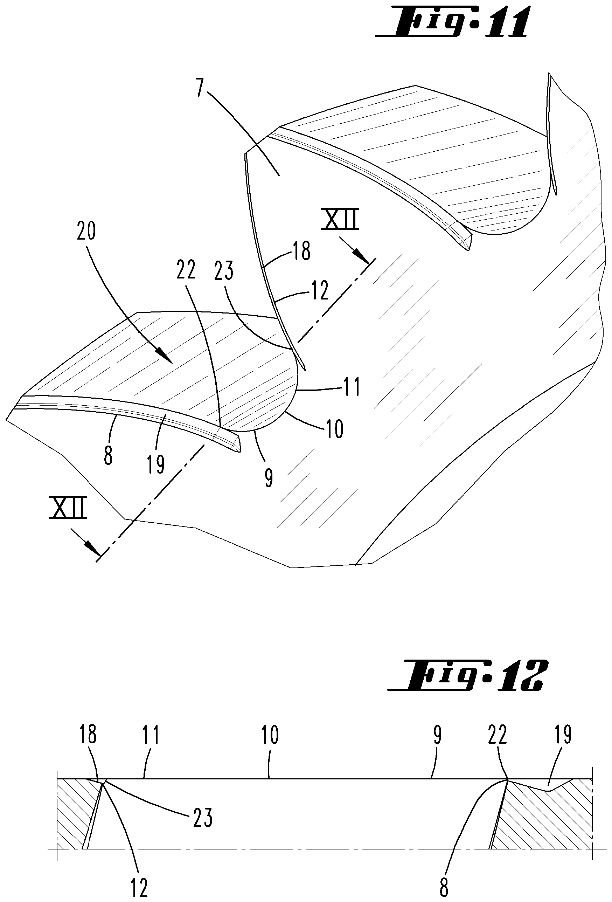

Bei dem in der Figur 11 dargestellten zweiten Ausführungsbeispiel besitzt jeder Schneidzahn 3 beziehungsweise jede Schneidzahnlücke 20 zwei Flankenschneidabschnitte 8, 12. Der Flankenschneidabschnitt 8 wird vom Rand einer Furche 19 und der Flankenschneidabschnitt 12 vom Rand einer Fase 18 gebildet. Die Flankenschneidabschnitte 8, 12 liegen somit um einen geringen Abstand versetzt zur Stirnseite 7. Dieser Abstand beträgt maximal der Tiefe der Furche 19 bzw. der Tiefe der Fase 18.

Die Abschrägungen 21 fehlen hier. Die beiden Kopfschneidabschnitte 9, 11 und der dazwischen liegende Scheitelschneidabschnitt 10 verlaufen hier in der Ebene der Stirnseite 7. Dies hat zur Folge, dass der Flankenschneidabschnitt 12 unter Ausbildung einer geringfügigen Unstetigkeit 23 in den Kopfschneidabschnitt 11 übergeht und der Flankenschneidabschnitt 8 unter Ausbildung einer geringen Unstetigkeit 22 in den Kopfschneidabschnitt 9 übergeht. Diese beiden Unstetigkeiten 22, 23 haben den Vorteil, dass dort beim Wälzschälen der Span bricht. Es entstehen die gewünschten kurzen Späne. Es wird vermieden, dass sich bei einer ringsum laufenden, ununterbrochenen Schneidkante Spanlocken ausbilden.

Die Unstetigkeiten 22, 23 sind aber derart gering, dass sie beim Werkstück keine oder nur sehr geringfügige Konturen hinterlassen.

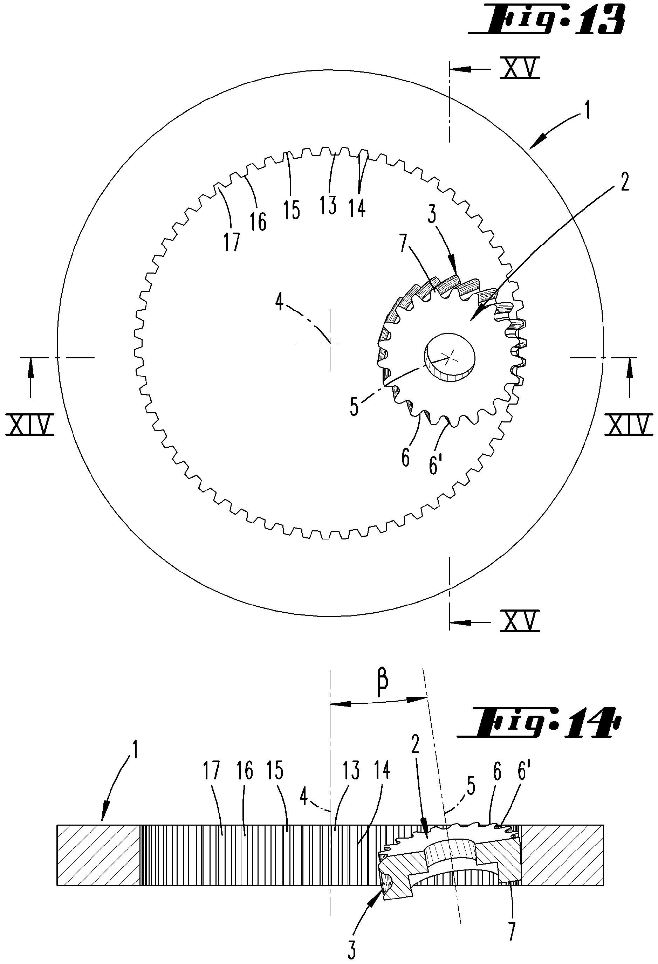

Bei dem in den Figuren 13 bis 19 dargestellten dritten Ausführungsbeispiel wird ein innen verzahntes Werkrad 1 mit einem außen verzahnten Schneidwerkzeug 2 bearbeitet. Die Figur 14 entspricht im Wesentlichen einer Darstellung gemäß Figur 1 des ersten Ausführungsbeispiels. Während beim ersten Ausführungsbeispiel die Drehachse 4 des Werkrades 1 und die Drehachse 5 des Schneidrades 2 in einer Projektionsebene, in der die Werkstückspindelachse 4 liegt, und die durch die tiefste Zahneingriffsstelle des Schneidzahnes gelegt ist, parallel zueinander verlaufen, besitzt bei dem in den Figuren 13 bis 19 dargestellten Ausführungsbeispiel die Werkzeugspindelachse 2 eine Neigung β gegenüber der Werkstückspindelachse 4. Bei dem in den Figuren 1 bis 12 dargestellten Ausführungsbeispielen verlaufen die Scheitellinien der Schneidzähne 3 auf einer Kegelstumpfmantelfläche. Bei dem in den Figuren 13 bis 19 dargestellten Ausführungsbeispiel verlaufen die Scheitellinien 3' der Schneidzähne 3 auf einer Zylindermantelfläche. Durch den Neigungswinkel β ergibt sich ein Freiwinkel der Scheitellinie 3' der Zahnköpfe über die Erstreckungslänge der Schneidzähne 3 gegenüber der Scheitellinie des Zahnfußes der zu fertigenden Verzahnung im Werkrad 1.

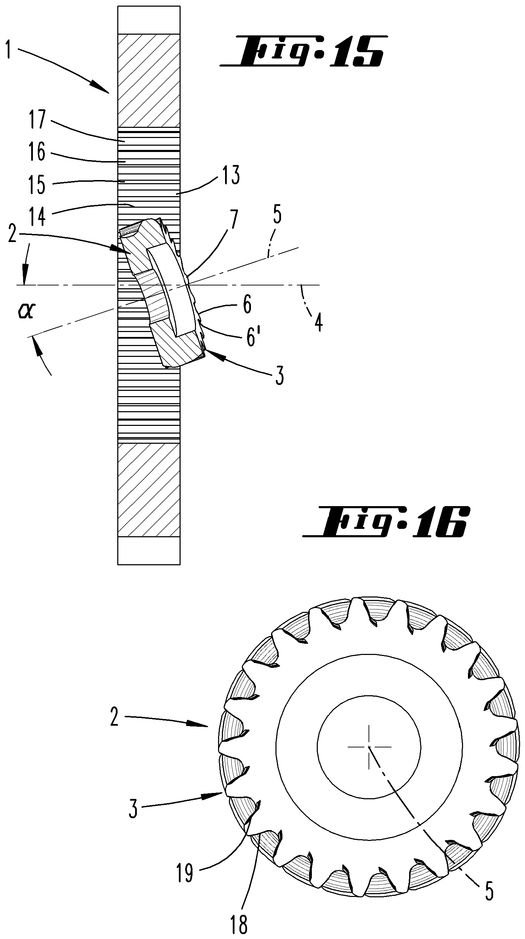

Die Figur 15 zeigt den Achskreuzwinkel α. Der Achskreuzwinkel α, der bevorzugt etwa 20° beträgt, wird in einer Ebene gemessen, die sich senkrecht zur Projektionsebene erstreckt, in der der Neigungswinkel β liegt, der bevorzugt 8° beträgt.

Die Schneidkanten der Schneidzähne 3 werden auch hier von Fasen 18 beziehungsweise Furchen 19 ausgebildet und weisen einen Kopfschneidabschnitt auf.

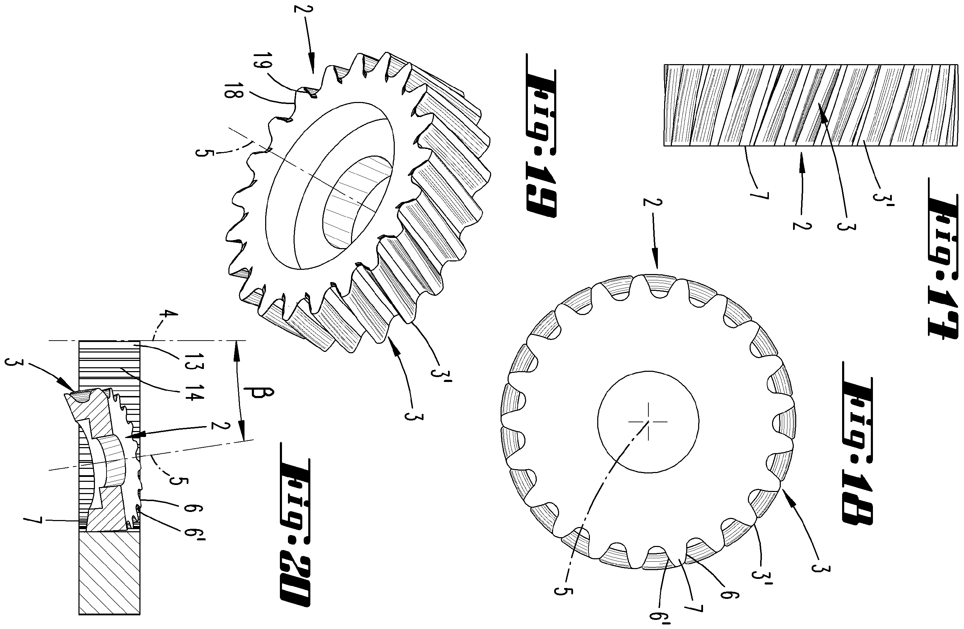

Die Figur 20 zeigt ein viertes Ausführungsbeispiel in einer Darstellung gemäß Figur 14. Anders als beim dritten Ausführungsbeispiel liegt die Stirnfläche 7 nicht in einer Ebene, sondern in einer Innenkegelfläche, so dass das Schneidrad 2 mit einem positiven Spanwinkel die Verzahnung im Werkrad 1 erzeugt.

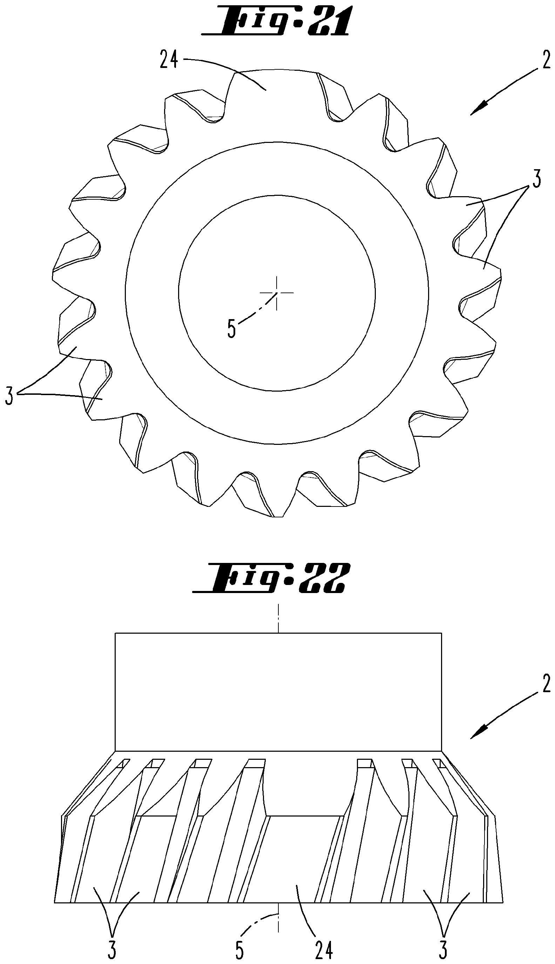

Auch die Zähne 3, 24 des in den Figuren 21 und 22 dargestellten Schneidrades 2 bilden Schneidkanten, die von Furchen 19 beziehungsweise Fasen 18 gebildet sind und Kopfschneidabschnitte aufweisen. Im Unterschied zu den in den vorangehenden Ausführungsbeispielen beschriebenen Schneidwerkzeugen 2 besitzt das in den Figuren 20 und 21 dargestellte Schneidwerkzeug zumindest einen in Umfangsrichtung des Schneidwerkzeuges 2 verbreiterten Schneidzahn 24. Der Schneidzahn 24 erstreckt sich über eine Umfangslänge von zwei Schneidzähnen 3 der regulären Teilung. Der Blockschneidzahn 24 wird somit von zwei regulären Schneidzähnen 3 gebildet, zwischen denen die Zahnlücke fehlt.

Die Umfangslänge des Blockschneidzahns 24 ist aber ansonsten nicht beschränkt.

Die Zahnlänge in Umfangsrichtung kann auch eine ungerade Teilung sein.

Die Stirnseite 7 des Werkrades 1 kann eine Ebene sein. Die Stirnseite 7 kann aber auch eine Innenkegelfläche sein. Die Scheitellinien der Schneidzähne 3, 24 können auf einer Zylindermantelfläche angeordnet sein, so dass das Schneidrad 2 in einer Betriebsstellung gemäß der Figuren 14 oder 20 verwendet werden kann. Die Scheitellinien der Schneidzähne 3, 24 können aber auch auf einer Kegelstumpfmantelfläche verlaufen, wie es bei einem Werkzeug gemäß der Figuren 1 bis 12 der Fall ist.

### Bezugszeichenliste:

| | | | |
|---|---|---|---|
| 1 | Werkrad | α | Achskreuzwinkel |
| 2 | Schneidwerkzeug | β | Neigungswinkel |
| 3 | Schneidzahn | | |
| 3' | Scheitellinie | | |
| 4 | Werkstückspindelachse | | |
| 5 | Werkzeugachse | | |
| 6 | Zahnflanke | | |
| 6' | Zahnflanke | | |
| 7 | Stirnseite | | |
| 8 | Flankenschneidabschnitt | | |
| 9 | Kopfschneidabschnitt | | |
| 10 | Scheitelschneidabschnitt | | |
| 11 | Kopfschneidabschnitt | | |
| 12 | Flankenschneidabschnitt | | |
| 13 | Zahn | | |
| 14 | Zahnflanke | | |
| 15 | Zahngrund | | |
| 16 | Zahnkopf | | |
| 17 | Zahnlücke | | |
| 18 | Fase | | |
| 19 | Furche | | |
| 20 | Schneidzahnlücke | | |
| 21 | Abschrägung | | |
| 22 | Unstetigkeit | | |
| 23 | Unstetigkeit | | |
| 24 | verbreiterter Schneidzahn | | |

## Patentansprüche

1. Verfahren zum Verzahnen von Werkrädern (1) mit einem Schneidzähne (3, 24) aufweisenden Schneidwerkzeug (2), wobei das Werkrad (1) von einer Werkstückspindel um eine Werkstückspindelachse (4) und das Schneidwerkzeug (2) von einer Werkzeugspindel um eine Werkzeugspindelachse (5) in einem vorgegebenen Drehzahlverhältnis zueinander drehangetrieben werden, die Werkstückspindelachse (4) und die Werkzeugspindelachse (5) in einem Achskreuzwinkel (α) zueinander stehen und wobei die Zahnflanken (6, 6') der Schneidzähne (3, 24) an ihren stirnseitigen Enden Schneidkanten (8, 9, 10, 11, 12) mit an den Rändern einer Lücke (20) zwischen zwei benachbarten Schneidzähnen (3) angeordneten, jeweils entlang einer ersten Konturlinie sich erstreckenden Flankenschneidabschnitte (8, 12) ausbilden, die zufolge eines Vorschubs in Richtung der Verzahnung des Werkrades (1) schneidend in das Werkrad (1) eingreifend Zähne (13) mit einer durch den Schneidkantenverlauf vorgegebenen Zahnflankenkontur erzeugen, **dadurch gekennzeichnet, dass** die einer spitzwinklig zur Stirnfläche (7) des Schneidzahnes (3, 24) verlaufenden Zahnflanke (6) zugeordnete Schneidkante (12) vom Rand einer Fase (18) gebildet ist, die einer stumpfwinklig zur Stirnfläche (7) des Schneidzahnes (3) verlaufende Zahnflanke (6') zugeordnete Schneidkante (8) vom Rand einer Furche (19) gebildet ist, und die Stirnflächen (7) aller Schneidzähne (3, 24) in einer rotationssymmetrisch um die Werkzeugspindelachse (5) verlaufenden Fläche, insbesondere einer Ebene oder einer Innenkegelmantelfläche liegen, wobei sich an jeden der beiden Flankenschneidabschnitte (8,12) ein Kopfschneidabschnitt (9, 11) anschließt, der sich entlang einer zweiten Konturlinie im Bereich des Grundes der Schneidzahnlücke (20) erstreckt, wobei die zweite Konturlinie mit einer Fußeckenkrümmung gekrümmt ist, und dass mit den Kopfschneidabschnitten (9, 11) zumindest teilverrundete Zahnköpfe (16) der Zähne (13) erzeugt werden.

2. Verfahren nach Anspruch 1, **dadurch gekennzeichnet, dass** die gerundeten Kopfschneidabschnitte (9, 10, 11) die beiden gegenüber den Kopfschneidabschnitten (9, 10, 11) auf entgegengesetzt gekrümmten Bögen verlaufende Flankenschneidabschnitte (8, 12), knickfrei oder bis auf eine spanbrechende Unstetigkeit im Wesentlichen knickfrei zu einer U-förmigen Schneidkante verbinden.

3. Verfahren nach einem der vorhergehenden Ansprüche, **dadurch gekennzeichnet, dass** die in Erstreckungsrichtung der Schneidzähne (3, 24) verlaufende Scheitellinie (3') der Schneidzähne (3, 24) in einer Zylindermantelfläche verlaufen und dass die Werkzeugspindelachse (5) gegenüber der Werkstückspindelachse (4) quer zum Achskreuzwinkel (α) um einen Neigungswinkel (β) geneigt ist.

4. Verfahren nach einem der vorhergehenden Ansprüche, **dadurch gekennzeichnet, dass** das Schneidwerkzeug (2) zumindest einen Schneidzahn (24) aufweist, der in Umfangsrichtung des Schneidwerkzeuges (2) gegenüber den anderen Schneidzähnen (3) verbreitert ist und das Drehzahlverhältnis so gewählt ist, dass nach einem ein- oder mehrmaligen Umlaufen des Schneidwerkzeuges (2) und einem einmaligen Umlaufen des Werkrades (1) der verbreiterte Schneidzahn (24) wieder in dieselbe verbreiterte Zahnlücke zwischen zwei Zähnen des Werkrades (1) eintritt.

5. Verfahren nach Anspruch 4, **dadurch gekennzeichnet, dass** sich der mindestens eine verbreiterte Schneidzahn (24) über mindestens eine gerade oder ungerade oder gebrochene Anzahl von Abschnitten der regulären Teilung des Schneidwerkzeuges (2) erstreckende vollständige Zahnlücke erstreckt.

6. Schneidwerkzeug zur Durchführung des Verfahrens gemäß einem der vorhergehenden Ansprüche, bei dem Zahnflanken (6, 6') von Schneidzähnen (3) an ihren stirnseitigen Enden Schneidkanten (8, 9, 10, 11, 12) mit an den Rändern einer Lücke (20) zwischen zwei benachbarten Schneidzähnen (3) angeordneten, sich jeweils entlang einer ersten Konturlinie erstreckenden Flankenschneidabschnitten (8, 12) ausbilden, wobei die einer spitzwinklig zur Stirnfläche (7) des Schneidzahnes (3) verlaufenden Zahnflanke (6) zugeordnete Schneidkante (12) vom Rand einer Fase (18) gebildet ist, die einer stumpfwinklig zur Stirnfläche (7) des Schneidrades (3) verlaufende Zahnflanke (6') zugeordnete Schneidkante (8) vom Rand einer Furche (19) gebildet ist und die Stirnfläche (7) aller Schneidzähne (3, 24) in einer rotationssymmetrisch um die Werkzeugspindelachse (5) verlaufenden Fläche, insbesondere einer Ebene oder einer Innenkegelmantelfläche liegen, **dadurch gekennzeichnet, dass** sich an jeden der beiden Flankenschneidabschnitte (8, 12) ein Kopfschneidabschnitt (9, 11) anschließt, der sich entlang einer zweiten Konturlinie im Bereich des Grundes der Schneidzahnlücke (20) erstreckt, wobei die zweite Konturlinie mit einer Fußeckenkrümmung gekrümmt ist und die gerundeten Kopfschneidabschnitte (9, 10, 11) die beiden gegenüber den Kopfschneidabschnitten (9, 10, 11) auf entgegengesetzt gekrümmten Bögen verlaufende Flankenschneidabschnitte (8, 12) knickfrei oder bis auf eine spanbrechende Unstetigkeit im Wesentlichen knickfrei zu einer U-förmigen Schneidkante verbinden.

7. Schneidwerkzeug nach Anspruch 6, **dadurch gekennzeichnet, dass** die in Erstreckungsrichtung der Schneidzähne (3, 24) verlaufende Scheitellinie (3') der Schneidzähne (3, 24) in einer Zylindermantelfläche verlaufen.

8. Schneidwerkzeug nach einem der Ansprüche 6 bis 7, **dadurch gekennzeichnet, dass** das Schneidwerkzeug (2) zumindest einen Schneidzahn (24) aufweist, der in Umfangsrichtung des Schneidwerkzeuges (2) gegenüber den anderen Schneidzähnen (3) verbreitert ist.

9. Schneidwerkzeug nach Anspruch 8, **dadurch gekennzeichnet, dass** sich der mindestens eine verbreiterte Schneidzahn (24) über mindestens eine der regulären Teilung des Schneidwerkzeuges (2) erstreckenden vollständigen Zahnlücke erstreckt.

10. Vorrichtung zum Verzahnen von Werkrädern (1) mit einem Schneidzähne (3) aufweisenden Schneidwerkzeug (2), wobei das Werkrad (1) von einer Werkstückspindel um eine Werkstückspindelachse (4) und das Schneidwerkzeug (2) von einer Werkzeugspindel um eine Werkzeugspindelachse (5) in einem vorgegebenen Drehzahlverhältnis zueinander drehangetrieben werden, die Werkstückspindelachse (4) und die Werkzeugspindelachse (5) in einem Achskreuzwinkel (α) zueinander stehen und wobei die Zahnflanken (6, 6') der Schneidzähne (3) an ihren stirnseitigen Enden Schneidkanten (8, 9, 10, 11, 12) mit an den Rändern einer Lücke (20) zwischen zwei benachbarten Schneidzähnen (3) angeordneten, jeweils entlang einer ersten Konturlinie sich erstreckende Flankenschneidabschnitte (8, 12) ausbilden, die zufolge eines Vorschubs in Richtung der Verzahnung des Werkrades (1) schneidend in das Werkrad (1) eingreifend Zähne (13) mit einer durch den Schneidkantenverlauf vorgegebenen Zahnflankenkontur erzeugen, **dadurch gekennzeichnet, dass** sich an jeden der beiden Flankenschneidabschnitte (8,12) ein Kopfschneidabschnitt (9, 11) anschließt, der sich entlang einer zweiten Konturlinie im Bereich des Grundes der Schneidzahnlücke (20) erstreckt, wobei die zweite Konturlinie mit einer Fußeckenkrümmung gekrümmt ist und die gerundeten Kopfschneidabschnitte (9, 10, 11) gegenüber den Kopfschneidabschnitten (9, 10, 11) auf entgegengesetzt gekrümmten Bögen verlaufende knickfrei oder bis auf eine spanbrechende Unstetigkeit im Wesentlichen knickfrei zu einer U-förmigen Schneidkante verbinden, so dass mit den Kopfschneidabschnitten (9, 11) zumindest teilverrundete Zahnköpfe (16) der Zähne (13) erzeugbar sind, wobei die einer spitzwinklig zur Stirnfläche (7) des Schneidzahnes (3) verlaufenden Zahnflanken (6) zugeordnete Schneidkante (12) vom Rand einer Fase (18) gebildet ist, die einer stumpfwinklig zur Stirnfläche (7) des Schneidzahnes (3) verlaufende Zahnflanke (6') zugeordnete Schneidkante (8) vom Rand einer Furche (19) gebildet ist.

11. Vorrichtung nach Anspruch 10, **dadurch gekennzeichnet, dass** die eine Schneidzahnlücke (20) zwischen zwei benachbarten Schneidzähnen (3) begrenzenden Schneidkanten (9 bis 12) maximal um die Tiefe der Furche (19) oder der Tiefe der Fase (18) oder insbesondere maximal um die Differenz der Tiefe der Fase (18) von der Tiefe der Furche (19) gegenüber einer gemeinsamen Ebene versetzt sind.

12. Verwendung eines Schneidwerkzeuges gemäß einem der Ansprüche 6 bis 9 zum Verzahnen von Werkrädern (1) mit dem Wälzschälverfahren.

13. Vorrichtung zur Durchführung des Verfahrens gemäß einem der Ansprüche 1 bis 5 mit einem Schneidwerkzeug gemäß einem der Ansprüche 6 bis 9, **gekennzeichnet durch** eine elektronische Steuereinrichtung, die derart programmiert ist, dass ein Werkrad (1) nach einem der Ansprüche 1 bis 5 durch Wälzschälen gefertigt wird.

## Claims

1. Method of toothing work wheels (1) with a cutting tool (2) having cutting teeth (3, 24), wherein the work wheel (1) is rotationally driven by a workpiece spindle about a workpiece spindle axis (4) and the cutting tool (2) is rotationally driven by a tool spindle about a tool spindle axis (5) in a predetermined speed ratio to one another, the workpiece spindle axis (4) and the tool spindle axis (5) are at an axis cross angle (α) to one another and wherein the tooth flanks (6, 6') of the cutting teeth (3, 24) form cutting edges (8, 9, 10, 11, 12) at their front ends with flank cutting sections (8, 12), which, as a result of a feed in the direction of the toothing of the work wheel (1), cuttingly engage in the work wheel (1) to produce teeth (13) with a tooth flank contour predetermined by the course of the cutting edge, **characterized in that** the cutting edge (12) associated with a tooth flank (6) extending at an acute angle to the end face (7) of the cutting tooth (3, 24) is formed by the edge of a chamfer (18), the cutting edge (8) associated with a tooth flank (6') extending at an obtuse angle to the end face (7) of the cutting tooth (3) is formed by the edge of a furrow (19), and the end faces (7) of all cutting teeth (3, 24) are arranged in a plane extending rotationally symmetrically about the tool spindle axis (5), in particular a plane or an inner taper surface, each of the two flank cutting sections (8,12) being adjoined by a head cutting section (9, 11) which extends along a second contour line in the region of the base of the cutting tooth gap (20), the second contour line being curved with a root-corner curvature, and **in that** at least partially rounded tooth heads (16) of the teeth (13) are produced with the head cutting sections (9, 11).

2. Method according to claim 1, **characterized in that** the rounded head cutting sections (9, 10, 11) connect the two flank cutting sections (8, 12), which extend on oppositely curved arcs with respect to the head cutting sections (9, 10, 11), kink-free or, apart from a chip-breaking discontinuity, substantially kink-free to form a U-shaped cutting edge.

3. Method according to one of the preceding claims, **characterized in that** the apex line (3') of the cutting teeth (3, 24) extending in the direction of extension of the cutting teeth (3, 24) runs in a cylinder surface and that the tool spindle axis (5) is inclined by an angle of inclination (β) relative to the workpiece spindle axis (4) transversely to the axis cross angle (α).

4. Method according to one of the preceding claims, **characterized in that** the cutting tool (2) has at least one cutting tooth (24) which is widened in the circumferential direction of the cutting tool (2) with respect to the other cutting teeth (3) and the speed ratio is selected in such a way, that after one or more revolutions of the cutting tool (2) and one revolution of the work wheel (1), the widened cutting tooth (24) re-enters the same widened tooth gap between two teeth of the work wheel (1).

5. Method according to claim 4, **characterized in that** the at least one widened cutting tooth (24) extends over at least one even or odd or broken number of sections of the regular pitch of the cutting tool (2).

6. Cutting tool for carrying out the method according to one of the preceding claims, in which tooth flanks (6, 6') of cutting teeth (3) form cutting edges (8, 9, 10, 11, 12) at their end faces, with flank cutting sections (8, 9, 10, 11, 12) arranged at the edges of a gap (20) between two adjacent cutting teeth (3) and each extending along a first contour line, 12), wherein the cutting edge (12) associated with a tooth flank (6) extending at an acute angle to the end face (7) of the cutting tooth (3) is formed by the edge of a chamfer (18), the cutting edge (8) associated with a tooth flank (6') extending at an obtuse angle to the end face (7) of the cutting wheel (3) is formed by the edge of a furrow (19), and the end face (7) of all cutting teeth (3, 24) lie in a surface extending rotationally symmetrically about the tool spindle axis (5), in particular a plane or an inner taper surface, **characterized in that** each of the two flank cutting sections (8, 12) is adjoined by a head cutting section (9, 11) which extends along a second contour line in the region of the base of the cutting tooth gap (20), wherein the second contour line is curved with a root-corner curvature and the rounded head cutting sections (9, 10, 11) connect the two flank cutting sections (8, 12), which extend on oppositely curved arcs with respect to the head cutting sections (9, 10, 11), kink-free or, apart from a chip-breaking discontinuity, substantially kink-free to form a U-shaped cutting edge.

7. Cutting tool according to claim 6, **characterized in that** the apex line (3') of the cutting teeth (3, 24) extending in the direction of extension of the cutting teeth (3, 24) extends in a cylindrical surface.

8. Cutting tool according to one of claims 6 to 7, **characterized in that** the cutting tool (2) has at least one cutting tooth (24) which is widened in the circumferential direction of the cutting tool (2) relative to the other cutting teeth (3).

9. Cutting tool according to claim 8, **characterized in that** the at least one widened cutting tooth (24) extends over at least one complete tooth gap extending from the regular pitch of the cutting tool (2).

10. Device for gear cutting of work wheels (1) with a cutting tool (2) having cutting teeth (3), wherein the work wheel (1) is rotationally driven by a workpiece spindle about a workpiece spindle axis (4) and the cutting tool (2) is rotationally driven by a tool spindle about a tool spindle axis (5) in a predetermined speed ratio to one another, the workpiece spindle axis (4) and the tool spindle axis (5) are at an axis cross angle (α) to one another and wherein the tooth flanks (6, 6') of the cutting teeth (3) form cutting edges (8, 9, 10, 11, 12) at their front ends with flank cutting portions (8, 12) which, as a result of a feed in the direction of the toothing of the workwheel (1), produce teeth (13) cuttingly engaging in the workwheel (1) and having a tooth flank contour predetermined by the course of the cutting edge, **characterized in that** each of the two flank cutting sections (8, 12) is adjoined by a head cutting section (9, 11) which extends along a second contour line in the region of the base of the cutting tooth gap (20), the second contour line being curved with a root-corner curvature and the rounded head cutting sections (9, 10, 11) are connected to the head cutting sections (9, 10, 11) on oppositely curved arcs without kinking or substantially without kinking except for a chip-breaking discontinuity to form a U-shaped cutting edge, so that at least partially rounded tooth heads (16) of the teeth (13) can be produced with the head cutting sections (9, 11), wherein the cutting edge (12) associated with a tooth flank (6) extending at an acute angle to the end face (7) of the cutting tooth (3) is formed by the edge of a chamfer (18), the cutting edge (8) associated with a tooth flank (6') extending at an obtuse angle to the end face (7) of the cutting tooth (3) is formed by the edge of a furrow (19).

11. Device according to claim 10, **characterized in that** the cutting edges (9 to 12) delimiting a cutting tooth gap (20) between two adjacent cutting teeth (3) are offset at most by the depth of the groove (19) or the depth of the chamfer (18) or, in particular, at most by the difference of the depth of the chamfer (18) from the depth of the groove (19) with respect to a common plane.

12. Use of a cutting tool according to any one of claims 6 to 9 for gear cutting of work wheels (1) with the hobbing method.

13. Device for carrying out the method according to any one of claims 1 to 5, comprising a cutting tool according to any one of claims 6 to 9, **characterized by** an electronic control device programmed in such a way that a work wheel (1) according to any one of claims 1 to 5 is produced by hob peeling.

## Revendications

1. Procédé de taillage de roues à tailler (1) avec un outil de coupe (2) comportant des dents de coupe (3, 24), sachant que la roue à tailler (1) est entraînée en rotation par une broche porte-pièce autour d'un axe de broche porte-pièce (4) et l'outil de coupe (2) est entraîné en rotation par une broche porte-outil autour d'un axe de broche porte-outil (5) dans un rapport de nombre de tours prédéfini l'un par rapport à l'autre, l'axe de broche porte-pièce (4) et l'axe de broche porte-outil (5) se situent dans un angle de croisement d'axes (α) l'un par rapport à l'autre et sachant que les flancs de dent (6, 6') des dents de coupe (3, 24) constituent à leurs extrémités frontales des arêtes de coupe (8, 9, 10, 11, 12) avec des sections de coupe de flanc (8, 12) disposées sur les bords d'un évidement (20) entre deux dents de coupe voisines (3), s'étendant respectivement le long d'une première ligne de profil, qui génèrent à la suite d'une avance en direction de la taille de denture de la roue à tailler (1) des dents (13) attaquant en coupant dans la roue à tailler (1) avec un profil de flanc de dent prédéfini par le tracé d'arête de coupe **caractérisé en ce que** l'arête de coupe (12) attribuée à un flanc de dent (6) passant à angle aigu de la surface frontale (7) de la dent de coupe (3, 24) est formée par le bord d'un chanfrein (18), l'arête de coupe (8) attribuée à un flanc de dent (6') passant à angle obtus de la surface frontale (7) de la dent de coupe (3) est formée par le bord d'une rainure (19) et les surfaces frontales (7) de toutes les dents de coupe (3, 24) se situent dans une surface passant symétriquement en rotation autour de l'axe de broche porte-outil (5), en particulier d'un plan ou d'une surface d'enveloppe conique intérieure, sachant qu'une section de coupe de tête (9, 11) se raccorde à chacune des deux sections de coupe de flanc (8, 12), qui s'étend le long d'une deuxième ligne de profil dans la zone de la base du creux de dent de coupe (20), sachant que la deuxième ligne de profil est courbée avec une courbure d'angle de pied et **en ce que** des têtes de dent (16) au moins partiellement arrondies des dents (13) sont générées avec les sections de coupe de tête (9, 11).

2. Procédé selon la revendication 1, **caractérisé en ce que** les sections de coupe de tête (9, 10, 11) arrondies relient sans flexion les deux sections de coupe de flanc (8, 12) passant en face des sections de coupe de tête (9, 10, 11) sur des arcs courbés de façon opposée ou bien pour l'essentiel sans flexion jusqu'à une discontinuité brisant les copeaux en une arête de coupe en forme de U.

3. Procédé selon l'une quelconque des revendications précédentes, **caractérisé en ce que** les lignes de sommet (3') des dents de coupe (3, 24) passant en direction d'extension des dents de coupe (3, 24) passent dans une surface d'enveloppe cylindrique et **en ce que** l'axe de broche porte-outil (5) est incliné d'un angle d'inclinaison (**β**)transversalement à l'angle de croisement d'axes (**α**) par rapport à l'axe de broche porte-pièce (4).

4. Procédé selon l'une quelconque des revendications précédentes, **caractérisé en ce que** l'outil de coupe (2) comporte au moins une dent de coupe (24), qui est élargie en direction périphérique de l'outil de coupe (2) par rapport aux autres dents de coupe (3) et le rapport de nombre de tours est choisi de telle manière qu'après une ou plusieurs révolutions de l'outil de coupe (2) et une révolution unique de la roue à tailler (1), la dent de coupe élargie (24) pénètre à nouveau dans ce même creux de dent élargi entre deux dents de la roue à tailler (1).

5. Procédé selon la revendication 4, **caractérisé en ce qu'**au moins une dent de coupe élargie (24) s'étend sur au moins un creux de dent complet s'étendant sur un nombre pair ou impair ou fractionné de sections du pas régulier de l'outil de coupe (2).

6. Outil de coupe pour l'exécution du procédé selon l'une quelconque des revendications précédentes, pour lequel des flancs de dent (6, 6') de dents de coupe (3) constituent à leurs extrémités frontales des arêtes de coupe (8, 9, 10, 11, 12) avec des sections de coupe de flanc (8, 12) disposées sur les bords d'un évidement (20) entre deux dents de coupe voisines (3), s'étendant respectivement le long d'une première ligne de profil, sachant que l'arête de coupe (12) attribuée à un flanc de dent (6) passant à angle aigu de la surface frontale (7) de la dent de coupe (3) est formée par le bord d'un chanfrein (18), l'arête de coupe (8) attribuée à un flanc de dent (6') passant à angle obtus de la surface frontale (7) de la dent de coupe (3) est formée par le bord d'une rainure (19) et la surface frontale (7) de toutes les dents de coupe (3, 24) se situent dans une surface passant symétriquement en rotation autour de l'axe de broche porte-outil (5), en particulier d'un plan ou d'une surface d'enveloppe conique intérieure, **caractérisé en ce qu'**une section de coupe de tête (9, 11) se raccorde à chacune des deux sections de coupe de flanc (8, 12), qui s'étend le long d'une deuxième ligne de profil dans la zone de base du creux de dent de coupe (20), sachant que la deuxième ligne de profil est courbée avec une courbure d'angle de pied et les sections de coupe de tête arrondies (9, 10, 11) relient sans flexion les deux sections de coupe de flanc (8, 12) passant en face des sections de coupe de tête (9, 10, 11) sur des arcs courbés de façon opposée ou bien pour l'essentiel sans flexion jusqu'à une discontinuité brisant les copeaux en une arête de coupe en forme de U.

7. Outil de coupe selon la revendication 6, **caractérisé en ce que** la ligne de sommet (3') des dents de coupe (3, 24) passant en direction d'extension des dents de coupe (3, 24) passe dans une surface d'enveloppe cylindrique.

8. Outil de coupe selon l'une quelconque des revendications 6 à 7, **caractérisé en ce que** l'outil de coupe (2) comporte au moins une dent de coupe (24) qui est élargie en direction périphérique de l'outil de coupe (2) par rapport aux autres dents de coupe (3).

9. Outil de coupe selon la revendication 8, **caractérisé en ce qu'**au moins une dent de coupe élargie (24) s'étend sur au moins un creux de dent complet s'étendant sur au moins un pas régulier de l'outil de coupe (2).

10. Dispositif de taillage de roues à tailler (1) avec un outil de coupe (2) comportant des dents de coupe (3), sachant que la roue à tailler (1) est entraînée en rotation par une broche porte-pièce autour d'un axe de broche porte-pièce (4) et l'outil de coupe (2) est entraîné par une broche porte-outil autour d'un axe de broche porte-outil (5) dans un rapport de nombre de tours prédéfini l'un par rapport à l'autre, l'axe de broche porte-pièce (4) et l'axe de broche porte-outil (5) se situent dans un angle de croisement d'axes (**α**) l'un par rapport à l'autre et sachant que les flancs de dent (6, 6') des dents de coupe (3, 24) constituent à leurs extrémités frontales des arêtes de coupe (8, 9, 10, 11, 12) avec des sections de coupe de flanc (8, 12) disposées sur les bords d'un évidement (20) entre deux dents de coupe voisines (3), s'étendant respectivement le long d'une première ligne de profil, qui génèrent à la suite d'une avance en direction de la taille de la denture de la roue à tailler (1) des dents (13) par attaque en coupant dans la roue à tailler (1) avec un profil de flanc de dent prédéfini par le tracé d'arête de coupe **caractérisé en ce qu'**une section de coupe de tête (9, 11) se raccorde à chacune des deux sections de coupe de flanc (8, 12), qui s'étend le long d'une deuxième ligne de profil dans la zone de base du creux de dent de coupe (20), sachant que la deuxième ligne de profil est courbée avec une courbure d'angle de pied et les sections de coupe de tête arrondies (9, 10, 11) relient sans flexion les deux sections de coupe de flanc (8, 12) passant en face des sections de coupe de tête (9, 10, 11) sur des arcs courbés de façon opposée ou bien pour l'essentiel sans flexion jusqu'à une discontinuité brisant les copeaux en une arête de coupe en forme de U, de telle manière que des têtes de dent au moins partiellement arrondies (16) des dents (13) peuvent être générées avec les sections de coupe de tête (9, 11), sachant que l'arête de coupe (12) attribuée à un des flancs de dent (6) passant à angle aigu de la surface frontale (7) de la dent de coupe (3) est formée par le bord d'un chanfrein (18), l'arête de coupe (8) attribuée au flanc de dent (6') passant à angle obtus de la surface frontale (7) de la dent de coupe (3) est formée par le bord d'une rainure (19).

11. Dispositif selon la revendication 10, **caractérisé en ce que** les arêtes de coupe (9 à 12) limitant un creux de dent de coupe (20) entre deux dents de coupe voisines (3) sont décalées au maximum de la profondeur de la rainure (19) ou de la profondeur du chanfrein (18) ou en particulier au maximum de la différence entre la profondeur du chanfrein (18) et la profondeur de la rainure (19) par rapport à un plan commun.

12. Utilisation d'un outil de coupe selon l'une quelconque des revendications 6 à 9 pour le taillage de roues à tailler (1) avec le procédé de taillage en développante.

13. Dispositif d'exécution du procédé selon l'une quelconque des revendications 1 à 5 avec un outil de coupe selon l'une quelconque des revendications 6 à 9, **caractérisé par** un système de commande électronique, qui est programmé de telle manière qu'une roue à tailler (1) est fabriquée selon l'une quelconque des revendications 1 à 5 par taillage en développante.
